(19) Europäisches Patentamt

European Patent Office

Office européen des brevets

(11) Veröffentlichungsnummer: **0 354 385 B1**

(12) **EUROPÄISCHE PATENTSCHRIFT**

(45) Veröffentlichungstag der Patentschrift :
13.11.91 Patentblatt 91/46

(21) Anmeldenummer : 89113065.0

(22) Anmeldetag : 17.07.89

(51) Int. Cl.⁵ : **B65G 69/24**

(54) Überfahrbrücke.

(30) Priorität : 03.02.89 DE 3903176
09.08.88 DE 3826951

(43) Veröffentlichungstag der Anmeldung :
14.02.90 Patentblatt 90/07

(45) Bekanntmachung des Hinweises auf die
Patenterteilung :
13.11.91 Patentblatt 91/46

(84) Benannte Vertragsstaaten :
AT BE CH DE ES FR GB GR IT LI LU NL SE

(56) Entgegenhaltungen :
EP-A- 0 193 119
EP-A- 0 200 085
DE-A- 1 756 338
DE-B- 1 130 136

(56) Entgegenhaltungen :
FR-A- 2 298 500
GB-A- 733 196
GMA-HEFT 9 vom 27. Februar 1986, Seite 391
DE - GM 8 531 021
"Ladebrücke für stirnseitige Containerbeladung", Fördern und Heben 24 (1974), Nr. 3,
Seite 1278

(73) Patentinhaber : Alten, Kurt
Ringstrasse 14
W-3015 Wennigsen (DE)

(72) Erfinder : Alten, Kurt
Ringstrasse 14
W-3015 Wennigsen (DE)

(74) Vertreter : Depmeyer, Lothar
Auf der Höchte 30
W-3008 Garbsen 1 (DE)

## Beschreibung

Die Erfindung bezieht sich auf eine zum Überbrücken von Eisenbahngleisen dienende Überfahrbrücke nach dem Oberbegriff des Anspruchs 1.

Bei den bekannten Überfahrbrücken dieser Art (Zeitschrift "fördern und heben", 1974, Nr. 13, S. 1278), deren Brückenplatte sich vorn auf der Rampe fest abstützen muss, ergeben sich deshalb beim Be- und Entladen von Eisenbahnwagen bzw. hierauf befindlichen Containern über deren Stirnseite Schwierigkeiten, weil in aller Regel nicht unerhebliche Höhenunterschiede zwischen der Plattform des Eisenbahnwagens bzw. seines Containers einerseits und der Rampe andererseits bestehen. Es versteht sich, dass diese Höhenunterschiede den Ladebetrieb stören.

Der Erfindung liegt die Aufgabe zugrunde, diese Nachteile bei den eingangs erwähnten Überfahrbrücken zu beseitigen und demgemäss eine Überfahrbrücke vorzuschlagen, die die genannten Höhenunterschiede ohne weiteres auszugleichen imstande ist.

Diese Aufgabe wird durch die Merkmale nach dem Kennzeichnungsteil des Anspruchs 1 gelöst. Vorteilhafte Ausgestaltungen der Erfindung ergeben sich aus den Unteransprüchen.

Bei einer so ausgeführten Überfahrbrücke arretiert sich das freie Ende der Brückenplatte durch die hier befindlichen Stützen, wenn die Brückenplatte zur Inbetriebnahme der Überfahrbrücke auf das Niveau des Eisenbahnwagens bzw. seines Containers abgesenkt wird, während die Höhendifferenz zwischen dem freien Ende der Brückenplatte und der Rampe durch den an der Brückenplatte gelagerten Auffahrtkeil ausgeglichen wird.

Ein Ausführungsbeispiel der Erfindung ist nachfolgend erläutert. Es zeigen :

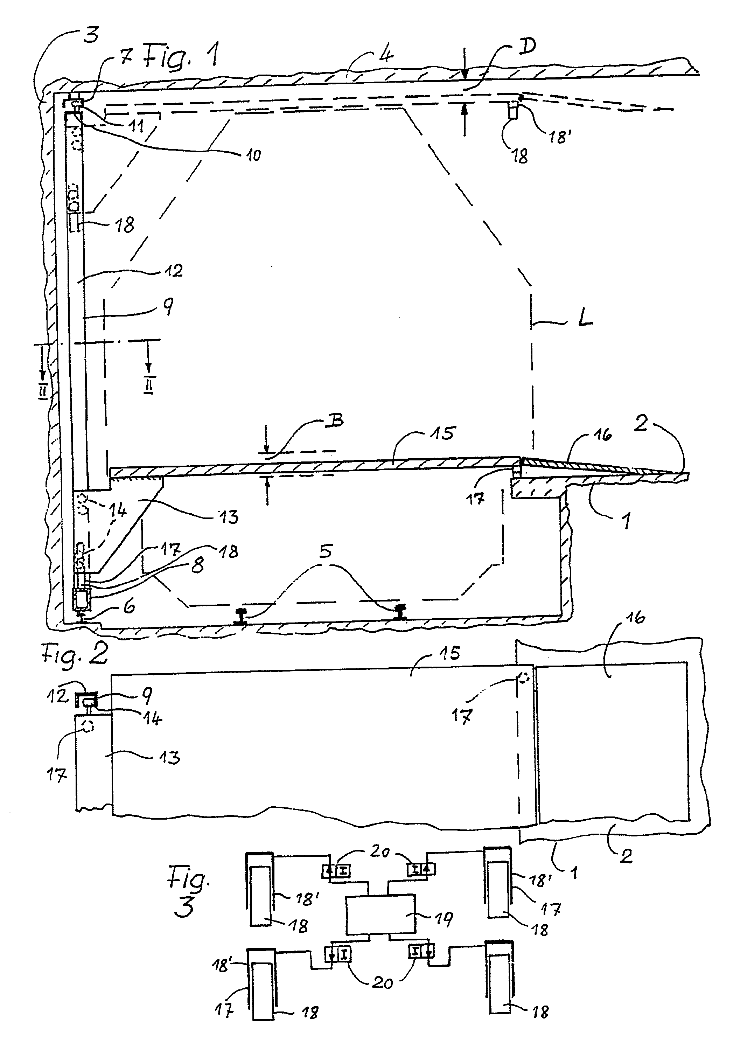

Fig. 1     eine Überfahrbrücke für Eisenbahngleise im senkrechten Schnitt in der Wirkstellung,
Fig. 2     einen Teilschnitt nach der Linie II-II von Fig. 1 und
Fig. 3     eine Stützenanordnung für die höhenverstellbaren Teile der Überfahrbrücke in schematischer Darstellung.

Zwischen einer Rampe 1 mit der Oberfläche 2 und der Aussenwand 3 eines Gebäudes, dessen Decke mit 4 bezeichnet ist, befinden sich Gleise 5. Die hierauf geführten Eisenbahnwagen und die aufgeladenen Container sind nicht dargestellt. Parallel zu den Gleisen 5 — der Aussenwand 3 zugekehrt — verläuft eine Schiene 6, und senkrecht darüber unter der Decke 4 ist eine parallel zu der Schiene 6 verlaufende Führungsschiene 7 installiert.

Die Schiene 6 dient zur Lagerung eines Fahrwerkes 8, das einen sich senkrecht nach oben erstreckenden Ausleger 9 aufweist, der als Rahmen mit oben liegender Traverse 10 ausgeführt ist. Hier befinden sich senkrechte Rollen 11 zum Eingriff in die Führungsschiene 7.

Der Ausleger 9 hat zu beiden Seiten der Überfahrbrücke senkrechte Schenkel 12 in U-Form, in denen ein Schlitten 13 mittels Rollen 14 höhenverstellbar geführt ist. Diese Verstellung kann in bekannter Weise durch Winden, Zahnstangen od. dgl. erfolgen.

Der Schlitten 13 dient zur Befestigung einer Brückenplatte 15, die waagerecht angeordnet ist und immer in dieser waagerechten Stellung verbleibt ; das vordere Ende der Brückenplatte ist mit einem kürzeren Auffahrtkeil 16 versehen, der begrenzt schwenkbar gelagert ist.

Am vorderen Ende der Brückenplatte 15 zu beiden Seiten befindet sich eine dort befestigte hydraulische Stütze 17 in Form eines hydraulischen Zylinders 18' mit Kolben 18. Diese Stützen 17 befinden sich auch am Schlitten 13 und können sich am Fahrwerk 8 abstützen. Die Stützen 17 stehen über eine Leitung und ein Ventil 20 mit einem Aggregat bzw. Sammelbehälter 19 in Verbindung. Wenn die Stützen 17 sich nicht auf dem Fahrwerk 8 bzw. der Oberfläche 2 abstützen, nehmen sie aufgrund des Eigengewichtes der Kolben 18 ihre grösste Länge ein. Kommen Sie beim Absenken der Brückenplatte 15 mit dem Fahrwerk 8 bzw. der Oberfläche 2 in Berührung, so kann das Öl durch Verdrängen und Verkürzen der Stütze 17 in den Sammelbehälter 19 gelangen. Wird die Senkbewegung der Brückenplatte 15 beendet z.B. durch Abschalten des Elektroantriebes für den Schlitten 13, so werden die Ventile 20 automatisch umgeschaltet, wobei der Abfluss des Öls gesperrt wird. Damit werden die Stützen 17 belastbar und stützen dann genau in der gewünschten Höhe die Brückenplatte 15 ab.

Durch diese Längenveränderbarkeit der Stützen 17 kann die Höhenstellung der Brückenplatte 15 über einen Bereich B erreicht werden, um so eine genaue Anpassung an unterschiedlich hohe Plattformen bzw. Container od. dgl. herbeiführen zu können.

Die gestrichelte, obere Stellung der Brückenplatte 15 ist die Ruhestellung der Brückenplatte 15. Ihre Unterkante kann dabei den Abstand D von der Decke 4 einnehmen. Dieser Abstand kann sehr klein sein, z.B. nur 8-12 cm betragen. Damit ist auch nach oben hin ein nur geringer Platzbedarf erforderlich ; Vgl. dazu das Lichtraumprofil L.

Wird der Schlitten 13 mit der Brückenplatte 15 nach unten in die Wirkstellung gefahren, so bekommen — wie schon ausgeführt — zunächst die Kolben 18 Bodenberührung. Ist die Brückenplatte 15 dann auf die vorgeschriebene Höhe gebracht, wird der Elektroantrieb für das Hub- bzw. Senkaggregat des Schlittens 13 abgeschaltet. Damit werden aber auch die Stützen 17 drucksteif, weil ihr Zylinderinhalt nicht mehr entweichen kann.

Besonders vorteilhaft ist es, wenn die Verstellung und Bewegung des Schlittens 13 durch mit Gewinde versehene Spindeln erfolgt, die vorzugsweise als Paar unverdrehbar an der Traverse 10 aufgehängt werden. Am Schlitten 13 befindet sich für jede Spindel eine mittels Elektromotor drehbare, am Schlitten gelagerte Mutter, die in das Gewinde der Spindel eingreift. Durch Drehen dieser Mutter kann dann der Schlitten 13 angehoben oder abgesenkt werden.

Vorzugsweise werden auch nur am freien Ende der Brückenplatte 15 Stützen 17 vorgesehen ; dementsprechend fehlen also die Stützen 17 am hinteren Ende der Brückenplatte 15 bzw. zwischen Schlitten 13 und dem Fahrwerk 8. In Verbindung mit den vorerwähnten Spindeln wird zur Inbetriebnahme der Brücke zunächst der Schlitten 13 abgesenkt, um dann nahe oberhalb der gewünschten unteren Endstellung den Spindelantrieb abzustellen. Alsdann werden die vorne liegenden Stützen 17 arretiert. Dabei hängt der Schlitten 13 gewissermassen in den Spindeln ; die Abstützung am vorderen Ende der Brückenplatte 15 ist dabei durch die dort befindlichen Stützen 17 abgesichert.

Unter bestimmten Betriebsbedingungen ist es vorteilhaft, die Längung der Stützen 17 auf ihre grösste Länge nicht allein aufgrund des Eigengewichtes des Kolbens 18 herbeizuführen, sondern den Zylindern 18' ein Druckmittel zuzuführen, und zwar mittels Pumpenaggregat, das zum Zeitpunkt des Hub- oder Senkbetriebes eingeschaltet wird. Dadurch wird erreicht, dass die Stützen 17 mit Sicherheit die gewünschte Längung erfahren. Die Druckmittelzufuhr muss aber so vollzogen werden, dass mit dem Absenken des Schlittens 13 die Stützen 17 aufsetzen und sich mit dem weiteren Absenken des Schlittens verkürzen können. Wenn dann die gewünschte Stellung der Brückenplatte 15 erzielt ist und der Antrieb für den Schlitten 13 abgestellt wird, muss gleichzeitig die Arretierung der Stützen 13 erfolgen.


## Patentansprüche

1. Zum Überbrücken von Eisenbahngleisen dienende Überfahrbrücke mit einer etwa waagerecht angeordneten, einstückig ausgeführten Brückenplatte (15), die mit ihrem hinteren Ende fest mit einem an einem sich vertikal nach oben erstreckenden Ausleger (9) höhenverstellbar angeordneten Schlitten (13) verbunden ist und sich mit ihrem vorderen Ende auf einer vor dem Eisenbahngleis (5) befindlichen Rampe (1) abstützt, wobei der Ausleger (9) auf einem hinter dem Eisenbahngleis (5) befindlichen, auf Schienen (6, 7) geleiteten Fahrwerk (8) gelagert ist, dadurch gekennzeichnet, dass das vordere, freie, mit einem begrenzt verschwenkbar gelagerten Auffahrtkeil (16) versehene Ende der Brückenplatte (15) mit einer an der Brückenplatte (15) befestigten, längenveränderbaren, sich in der Wirklage der Brückenplatte (15) arretierenden Stütze (17) versehen ist.

2. Überfahrbrücke nach Anspruch 1, dadurch gekennzeichnet, dass die Stütze(n) (17) hydraulische Zylinder (18, 18') sind, die sich aufgrund ihres Eigengewichtes längen und durch Absperren des Zylinderinhaltes arretierbar sind.

3. Überfahrbrücke nach Anspruch 2, dadurch gekennzeichnet, dass das Sperren des Zylinderinhaltes mit dem Abschalten des Antriebes für den Schlitten (13) erfolgt.

4. Überfahrbrücke nach Anspruch 1, dadurch gekennzeichnet, dass lediglich für das freie Ende der Brückenplatte (15) eine längenveränderbare Stütze (17) vorgesehen ist, während sich der hintere Teil der Brückenplatte bzw. der Schlitten (13) in der Wirklage der Brückenplatte an den Hubmitteln (z.B. einer Spindel) abstützt bzw. hieran aufgehängt ist.

5. Überfahrbrücke nach Anspruch 1, dadurch gekennzeichnet, dass die Stützen (17) durch Einführen eines Druckmittels längenveränderbar und durch Absperren des Zylinderinhaltes arretierbar sind.

6. Überfahrbrücke nach Anspruch 1, dadurch gekennzeichnet, dass der Schlitten (13) an einer oder mehreren, vorzugsweise zwei Gewindespindeln aufgehängt ist.

7. Überfahrbrücke nach Anspruch 6, dadurch gekennzeichnet, dass am Schlitten (13) ein elektrischer Antrieb für eine dort drehbar gelagerte Mutter vorgesehen ist, die in das Gewinde der Spindel eingreift, die ihrerseits undrehbar gelagert ist.

8. Überfahrbrücke nach Anspruch 6, dadurch gekennzeichnet, dass die Spindeln an einer Traverse (10) befestigt sind, die die beiden seitlichen Führungen (12) für den Schlitten (13) am oberen Ende verbindet.

9. Überfahrbrücke nach Anspruch 5, dadurch gekennzeichnet, dass die Stützen (17) mit dem Beenden der Abwärtsbewegung des Schlittens (13) arretierbar sind.

## Claims

1. Transfer bridge for bridging railway tracks, comprising a bridge plate (15), which is disposed in a substantially horizontal manner and is a one-piece construction, the rear end of said bridge plate being fixedly connected to a slide member (13), which is disposed in a vertically adjustable manner on a vertically upwardly extending arm (9), and the front end of said bridge plate being supported on a ramp (1), which is situated in front of the railway track (5), wherein the arm (9) is mounted on a chassis (8), which is situated behind the railway track and is guided on rails (6, 7), characterised in that the front free end of the bridge plate (15) is provided with a wedge-shaped platform (16), which is mounted so as to be pivotable to a limited extent, and is provided with a longitudinally adjustable support (17), which is secured to the bridge plate (15) and becomes locked when the bridge plate (15) is in its operative position.

2. Transfer bridge according to claim 1, characterised in that the support or supports (17) are hydraulic cylinders (18, 18'), which extend in length due to their inherent weight and are lockable by arresting the content of the cylinder.

3. Transfer bridge according to claim 2, characterised in that the arresting of the content of the cylinder is effected by the switching-off of the drive means for the slide member (13).

4. Transfer bridge according to claim 1, characterised in that only one longitudinally variable support (17) is provided for the free end of the bridge plate (15), while the rear portion of the bridge plate, or respectively the slide member (13), is supported on the lifting means (e.g. a spindle), or respectively mounted thereon, when the bridge plate is in its operative position.

5. Transfer bridge according to claim 1, characterised in that the supports (17) are longitudinally adjustable by the introduction of a pressure medium and are lockable by arresting the content of the cylinder.

6. Transfer bridge according to claim 1, characterised in that the slide member (13) is mounted on one or more, preferably two, threaded spindles.

7. Transfer bridge according to claim 6, characterised in that an electric drive means for a nut is provided on the slide member (13), which nut is rotatably mounted thereon and engages in the thread of the spindle which, in turn, is non-rotatably mounted.

8. Transfer bridge according to claim 6, characterised in that the spindles are secured to a cross-piece member (10), which joins together the two lateral guide members (12) for guiding the slide member (13) at the upper end.

9. Transfer bridge according to claim 5, characterised in that the supports (17) are lockable with the termination of the downward movement of the slide member (13).

## Revendications

1. Pont de transbordement servant à passer au-dessus des voies de chemin de fer et comportant un tablier (15) qui est disposé à peu près horizontalement, qui est d'une seule pièce, dont l'extrémité arrière est reliée rigidement à un coulisseau (13) monté réglable en hauteur sur un bras (9) s'étendant verticalement vers le haut et dont l'extrémité avant s'appuie sur un quai (1) se trouvant devant la voie de chemin de fer (5), le bras (9) étant monté sur un chariot (8) se trouvant derrière la voie de chemin de fer (5) et guidé sur des rails (6, 7), caractérisé en ce que l'extrémité, avant, libre et munie d'une rampe d'accès (16) montée basculante de manière limitée, du tablier (15) est munie d'un appui (17) qui est fixé au tablier (15), qui est réglable en longueur et qui se bloque quand le tablier (15) est en fonctionnement.

2. Pont de transbordement suivant la revendication 1, caractérisé en ce que l'appui (les appuis) (17) sont des vérins (18, 18') hydrauliques qui s'allongent en raison de leur propre poids et qui peuvent être bloqués en retenant le contenu des vérins.

3. Pont de transbordement suivant la revendication 2, caractérisé en ce que la retenue du contenu des vérins s'effectue par le débranchement du dispositif d'entraînement du coulisseau (13).

4. Pont de transbordement suivant la revendication 1, caractérisé en ce qu'il est prévu seulement un appui (17) réglable en longueur pour l'extrémité libre du tablier (15), tandis que la partie arrière du tablier et le coulisseau (13) s'appuient lorsque le tablier est en fonctionnement, sur des moyens de levage (par exemple une broche) ou y sont suspendus.

5. Pont de transbordement suivant la revendication 1, caractérisé en ce que les appuis (17) peuvent être réglables en longueur par introduction d'un fluide sous pression et peuvent être bloqués en retenant le contenu du vérin.

6. Pont de transbordement suivant la revendication 1, caractérisé en ce que le coulisseau (13) est suspendu à une ou à plusieurs et, de préférence, à deux broches filetées.

4

7. Pont de transbordement suivant la revendication 6, caractérisé en ce que sur le coulisseau (13) est prévu un dispositif électrique d'entraînement d'un écrou qui y est monté tournant et qui engrène dans le filetage de la broche, laquelle est montée sans possibilité de tourner.

8. Pont de transbordement suivant la revendication 6, caractérisé en ce que les broches sont fixées à une traverse (10) qui relie à l'extrémité supérieure les deux glissières (12) latérales de guidage du coulisseau (13).

9. Pont de transbordement suivant la revendication 5, caractérisé en ce que les appuis (17) peuvent être bloqués à la fin du mouvement descendant du coulisseau (13).

Fig. 1

Fig. 2

Fig. 3